# EUROPEAN PATENT APPLICATION

(11) **EP 4 424 795 A1**
(43) Date of publication of application: **04.09.2024**
(21) Application number: 23305262.0
(22) Date of filing: 28.02.2023
(51) Int. Cl.: C09K 19/56, G02F 1/1333

(54) **SILICON-BASED LIQUID CRYSTAL ALIGNMENT AGENT FOR SMART WINDOWS**

(71) Applicant: Saint-Gobain Glass France, 92400 Courbevoie (FR); Brilliant Optronics Co., Ltd, Kaohsiung City 81349 (TW)
(72) Inventor: LI, Cheng-Chang, Kaohsiung City 81349 (TW); CHANG, Li-Min, Kaohsiung City 81349 (TW); LIN, Kuan-Wu, Kaohsiung City 81349 (TW); GUO, Duan-Yi, Kaohsiung City 81349 (TW)
(74) Representative: Saint-Gobain Recherche

(57) **Abstract**

The present invention relates to a particular stack comprising a dielectric substrate, an electroconductive layer, and an alignment layer, and to a switchable device comprising two of such stacks and an electroactive layer comprising liquid crystals therebetween. It also relates to a process for preparing such stack.

## Description

### TECHNICAL FIELD

The present invention relates to a particular stack comprising a dielectric substrate, an electro-conductive layer, and an alignment layer, and to a switchable device comprising two of such stacks and an electroactive layer comprising liquid crystals therebetween. It also relates to a process for preparing such stack.

### TECHNICAL BACKGROUND

For the purpose of improving the quality of life, smart windows are currently developed and find many applications, particularly in the automotive industry and construction industry. Smart windows typically bring additional features to a glazing, which can consist in, for instance, on-demand tinting or privacy glazing. The switchable property of privacy devices is based on the use of liquid crystals molecules, which can be switched through application of an electric field between transparent clear state and scattering state, the liquid crystals changing orientation and modifying the diffuse light transmission while keeping total light transmission constant. There are various switchable liquid crystal devices, some using drops of liquid crystals dispersed in polymer, such as PDLC (for Polymer Dispersed Liquid Crystal), or others including nematic liquid crystals with ions in dynamic scattering mode (DSM). DSM is based on the electro-hydrodynamic effect which consists of the dynamic balance between the rotation of the liquid crystals and the diffusion of the ions.

In a conventional device, applying a voltage will allow to switch from a scattering state to a transparent clear state. However, it turns out that in practical applications, it is usually needed to maintain the device in a transparent state, which leads to a lot of energy consumption. The reverse system, showing a transparent state without voltage and a scattering state under voltage, could be reached by inserting an alignment layer, which maintains the liquid crystals in a uniform orientation in the absence of voltage. Alignment layers can also improve the optical features and stability. The most common technique to form an alignment layer on glass substrates is to coat polyimide material on the substrate, and then to maintain the polyimide-coated substrate at two different temperatures, namely a pre-curing temperature and a post-curing temperature, to generate a polyimide-based alignment layer. However, the common post-curing temperature, which is above 200°C, is too high for many substrates, in particular flexible substrates such as polyethylene terephthalate (PET) substrates.

Therefore, there is a need to provide a switchable device comprising an alignment layer, wherein the alignment layer can be formed under low temperatures, in particular temperatures which can be endured by flexible substrates.

### SUMMARY OF THE INVENTION

After extensive research, the inventors have found that the above need could be satisfied by using a particular functionalized silicon-based alignment material. This alignment material has successfully been deposited onto a stack comprising a substrate and an electro-conductive layer, by soaking into a solution of said material and drying at a temperature lower than those usually applied. Advantageously, the temperature applied in this process can be endured by flexible substrates. A switchable device can subsequently be prepared by inserting a liquid crystals layer between two of these stacks facing each other. The alignment material comprises a functionalized moiety comprising a long hydrophobic chain linked to a heterocationic group, which allows an optimal alignment, in particular homeotropic alignment, of the liquid crystal, and a silicon-based moiety, which allows the covalent bonding to the electro-conductive layer.

Thus, the present invention relates to a stack comprising a dielectric substrate, an electro-conductive layer, and an alignment layer, wherein the electro-conductive layer comprises a continuous area of dimension greater than or equal to 1 cm², preferably greater than or equal to 25 cm² and more preferably greater than or equal to 100 cm², and
wherein the alignment layer comprises a group of formula (I) covalently bound to the electro-conductive layer:

-(O)₃Si-R²-Z(R³)ₙ(R⁴)(R⁵)⁺, X⁻ (I),

in which:
R² is a C1-C12 alkylene,
R³ and R⁴ are each independently selected from C1-C12 alkyl, C2-C12 alkenyl, and C6-C12 aryl,
R⁵ is an alkyl, alkenyl, aryl or any combination thereof, and has 8 to 26 carbon atoms,
Z is N, S, or P,
n is 0 when Z is S, and n is 1 when Z is N or P, and
X⁻ is an anion.

In some embodiments, the dielectric substrate is made of an organic polymer preferably chosen from polyethylene, polypropylene, polyvinyl chloride, polyesters such as polyethylene terephthalate or polyethylene naphthalate, polycarbonate, polyurethane, polyacrylates such as polybutylacrylate or polymethyl methacrylate, polyamide, polyimide, and a fluoropolymer such as ethylene tetrafluoroethylene, polyvinylidene fluoride, polychlorotrifluoroethylene, ethylene chlorotrifluoroethylene, or fluorinated ethylene-propylene copolymers, or the dielectric substrate is a glassy substrate, such as an ultrathin glass sheet, preferably a substrate made of polyethylene terephthalate.

In some embodiments, the electro-conductive layer comprises a transparent conductive layer, preferably a transparent conductive oxide (TCO) layer, such as an Indium-Tin Oxide (ITO) or Fluorine-doped Tin Oxide (FTO) layer, a poly(3,4-ethylenedioxythiophene): poly(styrenesulfonate) salt layer or a silver nano-wire.

In some embodiments, the group of formula (I) as defined herein is such that:
R² is a C1-C12 alkylene, R³ and R⁴ are each independently selected from C1-C12 alkyl, R⁵ is a C8-C22 alkyl, Z is N, and n is 1.

In some embodiments, the group of formula (I) as defined herein is such that:
R² is a C1-C6 alkylene, R³ and R⁴ are each independently a C1-C6 alkyl, R⁵ is a C14-C22 alkyl, Z is N, n is 1, and X⁻ is a halide.

In a preferred embodiment, the dielectric substrate, the electro-conductive layer, and the alignment layer are transparent and flexible.

The present invention also relates to a device comprising:
- a first stack as defined herein;
- a second stack as defined herein;
   the two stacks facing each other,
- an electroactive layer located between the first and second alignment layers, and comprising an electroactive material comprising liquid crystals, and optionally ions, dyes, or mixtures thereof.

In some embodiments, the liquid crystals are cholesteric liquid crystals, nematic liquid crystals, smectic liquid crystals, polymer network liquid crystals, polymer stabilized cholesteric crystals or polymer dispersed liquid crystals, preferably cholesteric or nematic liquid crystals.

In some embodiments, the ions, when present, are chosen from zwitterion, halides ions, sulfate ions, and metal ions, preferably from ions of formula (III):

[A(R⁶)ₘ]⁺ Y⁻ (III),

in which:
A is chosen from N, P and S, preferably A is N;
when A is S, m is 3; when A is N or P, m is 4,
R⁶ are identical or different and selected from a hydrogen atom or a branched or linear hydrocarbon chain, optionally comprising heteroatoms;
Y⁻ is chosen from an entity comprising at least one halogen, HSO₄⁻, H₂PO₄⁻, NO₃⁻, NO₂⁻, and HCO₃⁻.

In some embodiments, the electroactive material does not comprise polymer at all or comprises a rate of polymer lower than 15 % in weight.

Another object of the present invention is a glazing unit, in particular a monolithic glazing, a laminated glazing, a double glazing or triple glazing, comprising a glazing and a device as defined herein attached to said glazing.

Another object of the present invention is a process for preparing a stack as defined herein, comprising:
a) providing a dielectric substrate coated with an electro-conductive layer, wherein the electro-conductive layer comprises a continuous area of dimension greater than or equal to 1 cm², preferably greater than or equal to 25 cm² and more preferably greater than or equal to 100 cm²,
b) applying an alignment solution layer on the surface of the electro-conductive layer, preferably by soaking, and
c) drying the alignment solution layer, preferably at a temperature comprised between 80°C and 150°C, so as to obtain a stack comprising an alignment layer,
   wherein the alignment solution comprises a compound of formula (II):

      (R¹O)₃Si-R²-Z(R³)ₙ(R⁴)(R⁵)⁺ , X⁻ (II),
   in which:
      each R¹ is independently a C1-C22 alkyl, C2-C22 alkenyl, or C6-C12 aryl,
      R² is a C1-C12 alkylene,
      R³ and R⁴ are each independently selected from C1-C12 alkyl, C2-C12 alkenyl, and C6-C12 aryl,
      R⁵ is an alkyl, alkenyl, aryl or any combination thereof, and has 8 to 26 carbon atoms,
      Z is N, S, or P,
      n is 0 when Z is S, and n is 1 when Z is N or P, and
      X⁻ is an anion.

In some embodiments, the alignment solution is an aqueous solution.

In some embodiments, the concentration of the compound of formula (II) in the solution is from 0.01 to 20 % w/v, preferably from 1% to 5% w/v.

In some embodiments, the compound of formula (II) is such that:
R² is a C1-C12 alkylene, R³ and R⁴ are each independently selected from C1-C12 alkyl, R⁵ is a C8-C22 alkyl, Z is N, and n is 1.

In a preferred embodiment, the compound of formula (II) is dimethyloctadecyl[3-(trimethoxysilyl)propyl]ammonium chloride.

### DETAILED DESCRIPTION & FIGURES

The invention and its advantages will be better understood upon reading the following description, which is given solely by way of non-limiting example and which is made in reference to the appended drawings in which:
- figure 1: schematic cross-sectional view of an embodiment of a stack according to the invention;
- figure 2: schematic cross-sectional view of an embodiment of a device according to the invention, said device comprising two stacks of figure 1 and an electroactive layer;
- figure 3: schematic cross-sectional view of an embodiment of a glazing unit according the invention, said glazing unit comprising the device of figure 2;
- figure 4: polarized optical microscopy images of a liquid crystal layer deposited onto a stack of the invention, without (top) and with (bottom) an applied voltage (A = Analyzer, P= Polarizer).

Before describing the invention, it is to be understood that it is not limited to the details of construction set forth in the following description. It will be apparent to those skilled in the art having the benefit of the present disclosure that the invention is capable of other embodiments and of being practiced or being carried out in various ways.

It is also to be understood that the dimensions of the different elements are not to scale on the drawings.

### Definitions

According to the present invention, the terms below have the following meaning:
The terms mentioned herein with prefixes such as for example C1-C12, can also be used with lower numbers of carbon atoms such as C1-C6. If, for example, the term C1-C12 is used, it means that the corresponding hydrocarbon chain may comprise from 1 to 12 carbon atoms, especially 1, 2, 3, 4, 5, 6, 7, 8, 9, 10, 11, or 12 carbon atoms. If, for example, the term C1-C6 is used, it means that the corresponding hydrocarbon chain may comprise from 1 to 6 carbon atoms, especially 1, 2, 3, 4, 5, or 6 carbon atoms.

The term "alkyl" refers to a saturated, linear or branched hydrocarbon group. A "C1-C12 alkyl" may in particular be methyl, ethyl, propyl, isopropyl, butyl, isobutyl, pentyl, isopentyl, hexyl, heptyl, octyl, nonyl, decyl, undecyl or dodecyl.

The term "alkenyl" refers to an unsaturated, linear or branched, hydrocarbon group, comprising one or several carbon-carbon double bond. A "C2-C12 alkenyl" may in particular be ethenyl, propenyl, butenyl, pentenyl, hexenyl, heptenyl, octenyl, nonenyl, decenyl, undecenyl or dodecenyl.

The term "aryl" corresponds to a mono- or bi-cyclic aromatic hydrocarbon. A "C6-C12 aryl" may in particular be phenyl, biphenyl, or naphtalenyl.

The term "alkylene" refers to a divalent saturated, linear or branched hydrocarbon group. A "C1-C12 alkylene" may in particular be methylene, ethylene, propylene, butylene, pentylene, hexylene, heptylene, octylene, nonylene, decylene, undecylene or dodecylene.

The term "halogen" refers to a fluorine, a chlorine, a bromine, an iodine atom.

The term "halide" refers to a fluoride, a chloride, a bromide, an iodide atom.

The term "flexible substrate", "flexible layer", or "flexible device" refers respectively to a substrate, layer, or device that can be deformed, folded, or curved, for instance by a user using his hands or when subjected to a roll-to-roll process. In particular, the "flexible substrate", "flexible layer", or "flexible device" may have a transversal deformation of at least 10% of its length upon hand-driven bending deformation.

The term "transparent substrate", "transparent layer", or "transparent device" refers respectively to a substrate, layer, or device through which one can see, and/or through which light rays can be transmitted without being substantially deviated.

In the following description, the expression "comprised between" is intended to include the upper and lower limits within the range described.

A stack (or more specifically "stack of layers") according to the invention comprises (preferably, consists of), in the following order: a dielectric substrate (or equivalently "dielectric base layer"), an electro-conductive layer, and an alignment layer. In a typical embodiment, the alignment layer coats all or part of a surface of the electro-conductive layer, which coats all or part of a surface of the dielectric substrate. In a particular embodiment, the alignment layer coats a part (for instance from 70% to 99.5%, or from 80% to 99%) of a surface of the electro-conductive layer, which coats all or part (for instance from 35% to 99%, or from 85% to 95%) of a surface of the dielectric substrate. In other words, in such embodiment, the electro-conductive layer has at least a first portion and a second portion, wherein:
- the first portion coats the dielectric substrate and is coated with the alignment layer; and
- the second portion coats the dielectric substrate but is not coated with the alignment layer.
The length of the second portion is advantageously lower than the length of the first portion.

In another particular embodiment, the alignment layer coats all or part of a surface of the electro-conductive layer, which coats a part of a surface of the dielectric substrate. In such embodiment, the part of the dielectric substrate which is not coated with the electro-conductive layer can be uncoated or, partially or totally coated with the alignment layer.

The expression "...coats a part of a surface..." or "coats partially a surface" may in particular refer to a coating of at least 20%, at least 30%, at least 40%, at least 50%, at least 60%, at least 70%, at least 80%, at least 90%, or at least 95%, and less than 100%, of such surface.

In a particular embodiment, the alignment layer coats all or part of a surface of the electro-conductive layer, which coats all or part of a first surface of the dielectric substrate, and a residual alignment layer coats all or part of a second surface of the dielectric substrate. In such embodiment, the stack typically comprises (preferably, consists of) in the following order: the residual alignment layer, the dielectric substrate, the electro-conductive layer, and the alignment layer. The residual alignment layer may in particular result from the conditions of the process for preparing the stack.

The dielectric substrate and the electro-conductive layer are typically in direct contact and attached to each other (typically, covalently attached). The electro-conductive layer and the alignment layer are covalently bound to each other. The first base layer, the first electrically conductive layer and the first alignment layers are typically parallel to each other.

The stack of the invention is advantageously transparent. The stack of the invention is advantageously flexible.

The dielectric substrate is advantageously transparent. The dielectric substrate is advantageously flexible. The dielectric substrate may in particular be made of an organic polymer, preferably chosen from polyethylene (PE), polypropylene (PP), polyvinyl chloride (PVC), polyesters such as polyethylene terephthalate (PET) or polyethylene naphthalate (PEN), polycarbonate (PC), polyurethane (PU), polyacrylates such as polybutylacrylate (PBA) or polymethyl methacrylate (PMMA), polyamide, polyimide (PI), and fluoropolymers such as ethylene tetrafluoroethylene (ETFE), polyvinylidene fluoride (PVDF), polychlorotrifluoroethylene (PCTFE), ethylene chlorotrifluoroethylene (ECTFE) or fluorinated ethylene-propylene copolymers (FEP). More preferably, the organic polymer is chosen from polyesters such as polyethylene terephthalate (PET) or polyethylene naphthalate (PEN), polycarbonate (PC), polyurethane (PU), polyacrylates such as polybutylacrylate (PBA) or polymethyl methacrylate (PMMA), polyamide, and polyimide (PI).

Alternatively, the dielectric substrate may be a glassy substrate, such as an ultrathin glass (UTG) sheet. In a preferred embodiment, the dielectric substrate is made of PET (or equivalently "PET substrate").

The electro-conductive layer is advantageously transparent. The electro-conductive layer is advantageously flexible. The electro-conductive layer (also called "electrode" or "electrode layer") comprises a continuous (i.e. electrically continuous) area of dimension greater than or equal to 1 cm², preferably greater than or equal to 25 cm² and more preferably greater than or equal to 100 cm². The continuous area may represent at least 20%, at least 30%, at least 40%, at least 50%, at least 60%, at least 70%, at least 80%, at least 90%, at least 95%, or at least 98% of the total area of the electro-conductive layer. Preferably, the electro-conductive layer consists of a continuous layer (i.e. the continuous area is 100% of the total area of the electroconductive layer) having an area of dimension greater than or equal to 1 cm², preferably greater than or equal to 25 cm² and more preferably greater than or equal to 100 cm². The term "continuous area" (or "continuous layer") refers to an area (or layer, respectively) for which an electrically conductive path is found from any point to any other point of the area. The term "continuous area" is the opposite to "segmented area", which is an area comprising at least one segmentation. In a segmented area, the current flowing from one point cannot reach another point if there is a segmentation between said two points (no conductive path between said two points). The electro-conductive layer may be patterned (for instance, micro-patterned) or non-patterned.

A width of the electro-conductive layer may be greater than or equal to 1 centimeter, preferably greater than or equal to 5 centimeters and advantageously greater than or equal to 10 centimeters, and/or a length of the electro-conductive layer may be greater than or equal to 1 centimeter, preferably greater than or equal to 5 centimeters and advantageously greater than or equal to 10 centimeters.

The electro-conductive layer typically comprises (preferably, consists of) a transparent conductive layer.

The electro-conductive layer may comprise (preferably, consist of) a transparent conductive polymer layer.

The electro-conductive layer may comprise (preferably, consist of) a transparent conductive oxide (TCO) layer, such as an Indium-Tin Oxide (ITO) or Fluorine-doped Tin Oxide (FTO) layer.

The electro-conductive layer may comprise (preferably, consist of) a PEDOT (poly(3,4-ethylenedioxythiophene): poly(styrenesulfonate) salt) layer or a silver nano-wire.

More preferably, the electro-conductive layer is a transparent Indium-Tin Oxide (ITO) layer.

The alignment layer is advantageously transparent. The alignment layer is advantageously flexible. The alignment layer comprises a group of formula (I) which is covalently bound to the electro-conductive layer:

-(O)₃Si-R²-Z(R³)ₙ(R⁴)(R⁵)⁺ , X⁻ (I),

in which:
R² is a C1-C12 alkylene,
R³ and R⁴ are each independently selected from C1-C12 alkyl, C2-C12 alkenyl, and C6-C12 aryl,
R⁵ is an alkyl, alkenyl, aryl or any combination thereof, and has 8 to 26 carbon atoms,
Z is N, S, or P,
n is 0 when Z is S, and n is 1 when Z is N or P, and
X⁻ is an anion.

The group of formula (I) can be covalently bound to the electro-conductive layer via one, two or three of the oxygen atoms of the silicon-based moiety -(O)₃Si-. When one or two oxygen atoms of the silicon-based moiety -(O)₃Si- are not bound to the electro-conductive layer, such oxygen atom(s) may in particular be linked to a hydrogen (thus forming a hydroxyl (-OH)), to -R¹ (thus forming a group -OR¹) where R¹ is C1-C22 alkyl, C2-C22 alkenyl, or C6-C12 aryl, or even to the Si atom of another group of formula (I). For instance, the group of formula (I) can be represented by the following formulae (I-1):

-(O)₃₋ₚ(R¹⁰O)ₚSi-R²-Z(R³)ₙ(R⁴)(R⁵)⁺ , X⁻ (I-1),

in which:
- R², R³, R⁴, R⁵, Z, n, X⁻ are as defined herein;
- p is 0, 1, or 2; and
- R¹⁰ is a hydrogen atom or R¹, with each R¹ being independently a C1-C22 alkyl, C2-C22 alkenyl, or C6-C12 aryl.

In formula (I), n is 0 or 1, depending on Z.

When Z is S, then n is 0, and the group of formula (I) can be represented as follows:

-(O)₃Si-R²-S(R⁴)(R⁵)⁺ , X⁻ ,

in which R², R⁴, R⁵, and X⁻ are as defined herein.

When Z is N or P, then n is 1, and the group of formula (I) can be represented as follows:

-(O)₃Si-R²-Z(R³)(R⁴)(R⁵)⁺ , X⁻ ,

in which Z is N or P, and R², R³, R⁴, R⁵, and X⁻ are as defined herein.

Preferably, Z is N.

Preferably R² is a C1-C6 alkylene, more preferably a propylene. A propylene can be represented as follows: -CH₂-CH₂-CH₂-.

In a particular embodiment, R³ and R⁴ are each independently selected from C1-C12 alkyl, preferably from C1-C6 alkyl. R³ and R⁴ can be identical or different. Preferably, R³ and R⁴ are identical.

In a preferred embodiment, R³ and R⁴ are methyl.

R⁵ is an alkyl, alkenyl, aryl or any combination thereof, and has 8 to 26 carbon atoms. "Any combination of alkyl, alkenyl, aryl" refers to a chemical group consisting of two or more groups chosen from alkyl, alkenyl and aryl linked together. Examples of such combinations are (aryl)-(alkenyl)- or (alkyl)-(aryl)-(alkyl)-.

In some embodiments, R⁵ has 14 to 22 carbon atoms, or even 16 to 20 carbon atoms.

In some embodiments, R⁵ is a C8-C22 alkyl or a C8-C22 alkenyl.

In a particular embodiment, R⁵ is a C8-C22 alkyl. Preferably, R⁵ is a C14-C22 alkyl. More preferably, R⁵ is a C16-C20 alkyl. Even more preferably, R⁵ is a C18 alkyl (i.e. octadecyl).

X⁻ may be any suitable anion. For instance, X⁻ may be a halide (i.e. chloride, fluoride, bromide, iodide, preferably chloride), tetrafluoroborate, nitrite, nitrate, hydrogenosulfate, chlorate, perchlorate, dihydrogenophosphate, hydrogenocarbonate, R'SO₃⁻ or R'CO₂⁻ wherein R' is an alkyl such as methyl or a perfluoroalkyl such as CF₃ or C₂F₅. In a particular embodiment, X⁻ is a halide, preferably, a chloride.

The total number of carbon atoms of R⁵ is advantageously higher than that of R³ and that of R⁴. For instance, R⁵ may have at least 4, at least 6, at least 8, at least 10, at least 12, or at least 14 more carbon atoms than each of R³ and R⁴.

In a particular embodiment, the group of formula (I) is such that R² is a C1-C12 alkylene, R³ and R⁴ are each independently selected from C1-C12 alkyl, R⁵ is a C8-C22 alkyl, Z is N, and n is 1.

In a preferred embodiment, the group of formula (I) is such that R² is a C1-C6 alkylene, R³ and R⁴ are each independently a C1-C6 alkyl, R⁵ is a C14-C22 alkyl, Z is N, n is 1, and X⁻ is a halide.

In a more preferred embodiment, the group of formula (I) is such that R² is a propylene, R³ and R⁴ are methyl, R⁵ is octadecyl, Z is N, n is 1, and X⁻ is a chloride.

The thickness of the alignment layer may in particular be inferior or equal to 200 nanometers (nm), for instance from 1 nm to 200 nm, from 5 nm to 100 nm, or from 40 nm to 80 nm.

The thickness of the electro-conductive layer may in particular be inferior or equal to 2 micrometers (µm), for instance from 1 nm to 1.5 µm, or from 5 nm to 150 nm, preferably from 20 nm to 60 nm. The thickness of the dielectric substrate may in particular be from 0.05 mm to 10 mm, for instance from 0.1 mm to 5 mm, from 2 mm to 8 mm, from 0.08 mm to 0.55 mm, or from 0.1 mm to 0.2 mm.

In a particular embodiment, the thickness of a stack according to the invention is greater than 0.05 mm and less than or equal to 10 mm, for example greater than 0.08 mm and less than or equal to 1 mm, greater than 0.08 mm and less than or equal to 0.5 mm, or greater than 0.1 mm and less than or equal to 0.3 mm.

In another particular embodiment, the thickness of a stack according to the invention is greater than or equal to 0.05 mm and less than or equal to 0.5 mm, for example greater than or equal to 0.08 mm and less than or equal to 0.3 mm, for example greater than or equal to 0.1 mm and less than or equal to 0.2 mm.

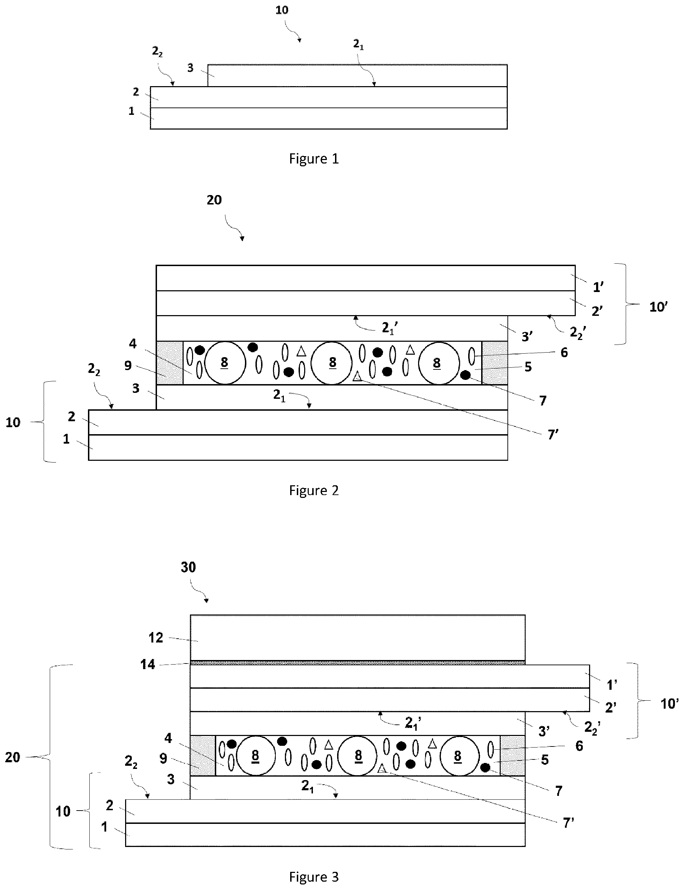

Figure 1 represents a schematic cross-sectional view of an embodiment of a stack according to the invention. The stack 10 comprises a dielectric substrate 1, an electro-conductive layer 2, and an alignment layer 3, wherein the electro-conductive layer 2 comprises a continuous area of dimension greater than or equal to 1 cm², preferably greater than or equal to 25 cm² and more preferably greater than or equal to 100 cm², and wherein the alignment layer 3 comprises a group of formula (I) as defined herein covalently bound to the electro-conductive layer 2. The alignment layer 3 coats a part of a surface the electro-conductive layer 2, which coats all of a surface of the dielectric substrate 1. The electro-conductive layer 2 has at least a first portion 2₁ and a second portion 2₂, wherein:
- the first portion 2₁ coats the dielectric substrate 1 and is coated with the alignment layer 3; and
- the second portion 2₂ coats the dielectric substrate 1 but is not coated with the alignment layer 3. The length of the second portion 2₂ is lower than the length of the first portion 2₁.

The stack of the invention is particularly suitable for being used in an electrically-controllable light-adjusting device (or "switchable device"). Hence, another object of the present invention is a device comprising:
- a first stack according to the invention;
- a second stack according to the invention;
   the two stacks facing each other,
- an electroactive layer located between the first and second alignment layers, and comprising an electroactive material comprising liquid crystals, and optionally ions, dyes or mixtures thereof.

The device of the invention may be defined as an electrically-controllable light-adjusting device (or "switchable device"). Such device refers to a device comprising an electroactive layer comprising an electroactive material comprising liquid crystals, and presenting a tunable optical property in function of the application of a predetermined voltage to said electroactive layer. The electroactive layer is able to switch between a first optical state and a second optical state in function of a predetermined voltage applied to the electroactive layer. The term "tunable optical property" for example refers to the transmission haze, the transmittance or the reflectance of the electroactive layer and thus of the device. The "first optical state" and "second optical state" corresponds to distinct optical states of the electroactive layer. In the first optical state, the tunable optical property has a first setting and, in the second optical state, the tunable optical property has a second setting distinct from the first setting. The state of the electroactive layer thus passes from the first optical state to the second optical state and *vice versa* depending on a predetermined voltage applied to the electroactive layer. In particular, when a predetermined voltage is applied to the electroactive layer, the liquid crystals of the electroactive layer change orientation in the electroactive layer and thus their arrangement in the electroactive layer between the first optical state and the second optical state. Such reorganization of the liquid crystals in the electroactive layer involves a modification of the optical properties of the electroactive layer between the first optical state and the second optical state.

The device is configured to present a first optical configuration when the electroactive layer is in the first optical state and the device is configured to present a second optical configuration when the electroactive layer is in the second optical state.

More particularly, the device is configured to be in a transparent state with a low transmission haze rate, when no voltage is applied, and, the device is configured to be in an opaque state or in a scattering state with a high transmission haze rate, when a voltage (for example, an alternating voltage of 50V) is applied.

The transmission haze rate is defined as the ratio of the diffuse transmission of light to the total transmission of light. The transmission haze rate is typically obtained from an ASTM measurement standard (D1003). The transmission haze rate can be measured with a haze meter.

A "low transmission haze rate" refers to a transmission haze rate of less than 20%, advantageously less than or equal to 15%, preferably less than or equal to 10%, more preferably less than or equal to 5%. A "high transmission haze rate" refers to a transmission haze rate of greater than 50%, advantageously greater than 60%, for instance greater than 70%, or greater than or equal to 80%.

A "transparent state or scattering state with a low transmission haze rate" typically means that it is possible to see through the device. An "opaque state or scattering state with a high transmission haze rate" typically means that it is not possible to see through the device.

The transition from a first optical configuration/first optical state to a second optical configuration/second optical state is advantageously reversible.

In the device of the invention, the first and second stacks face each other, and the electroactive layer is located between the alignment layers of the first and second stacks. The expression "face each other" means that the two stacks of layers according to the invention are symmetrical with respect to the electro-active layer sandwiched between the two stacks. In other words, the device of the invention comprises in the following order (and preferably without any other layer between): the dielectric substrate of the first stack, the electro-conductive layer of the first stack, the alignment layer of the first stack, the electroactive layer, the alignment layer of the second stack, the electro-conductive layer of the second stack, and the dielectric substrate of the second stack. In such device, each layer is preferably in direct contact with and attached to the preceding layer (if any) and the subsequent layer (if any). In particular, the electroactive layer is in direct contact with and attached to the alignment layer of the first stack and the alignment layer of the second stack.

The first stack, the electroactive layer and the second stack of the device are typically parallel to each other.

The alignment layers of the first and second stacks may be identical or different, preferably identical. The electro-conductive layers of the first and second stacks may be identical or different, preferably identical.

The dielectric substrates of the first and second stacks may be identical or different, preferably identical.

The first and second stacks may be identical or different, preferably identical.

The first and second stack are advantageously transparent. The first and second stack are advantageously flexible.

In a particular embodiment, for each of the first and second stack, the alignment layer coats a part of a surface the electro-conductive layer, which coats all of a surface of the dielectric substrate. In other words, in such embodiment, for each of the first and second stack, the electro-conductive layer has at least a first portion and a second portion, wherein:
- the first portion coats the dielectric substrate and is coated with the alignment layer; and
- the second portion coats the dielectric substrate but is not coated with the alignment layer.

The length of the second portion is advantageously lower than the length of the first portion.

The second portion of the electro-conductive layer of each of the first and second stack is advantageously configured to be connected, for example, to a bus bar.

The electroactive layer comprises an electroactive material, which comprises liquid crystals. Preferably, the electroactive material does not comprise polymer at all or comprises a rate of polymer lower than 15 % in weight.

The electroactive material advantageously has a viscosity greater than or equal to 0.01 Pa.s (Pascal-second), and preferably greater than or equal to 0.01 Pa.s and less than or equal to 2 Pa.s, said viscosity being measured at 25°C.

The liquid crystals may in particular be cholesteric liquid crystals, nematic liquid crystals, smectic liquid crystals, polymer network liquid crystals, polymer stabilized cholesteric crystals or polymer dispersed liquid crystals, preferably cholesteric liquid crystals or nematic liquid crystals In a preferred embodiment, liquid crystals are nematic liquid crystals, for instance nematic liquid crystals without chiral dopant

In another preferred embodiment, liquid crystals are cholesteric liquid crystals, for instance cholesteric liquid crystals with chiral dopant.

Advantageously, the electroactive material further comprises ions. Such ions may be any suitable ions, being compatible with liquid crystals. In a particular embodiment, ions are chosen from zwitterion, halides ions, sulfate ions, and metal ions. Preferably, ions are of formula (III):

[A(R⁶)ₘ]⁺ Y⁻ (III),

in which:
A is chosen from N, P and S, preferably A is N;
when A is S, m is 3; when A is N or P, m is 4,
R⁶ are identical or different and selected from a hydrogen atom or a branched or linear hydrocarbon chains, optionally comprising heteroatoms;
Y⁻ is chosen from an entity comprising at least one halogen atom (preferably, a halide), HSO₄⁻, H₂PO₄⁻, NO₃⁻, NO₂⁻, HCO₃⁻.

When A is N, said salts are ammonium salts, in particular when R⁶ are all different from hydrogen atoms, said salts are quaternary ammonium salts. When A is P, said salts are phosphonium salts, and when A is S, said salts are sulfonium salts.

When R⁶ is a branched or linear hydrocarbon chain, optionally comprising heteroatoms, it is preferred that R⁶ does not contain any oxygen, and it is even more preferred that R⁶ does not comprise any heteroatom. A preferred branched or linear hydrocarbon chain is an alkyl.

R⁶ may in particular be aliphatic (e.g. alkyl) chains devoid of oxygen and comprising at least 3 carbon atoms (for instance, from 3 to 18 carbon atoms). R⁶ may more particularly be aliphatic (e.g. alkyl) chains devoid of heteroatoms and comprising at least 3 carbon atoms (for instance, from 3 to 18 carbon atoms).

Preferably, R⁶ are identical chains.

Even more preferably, R⁶ are identical C₃-C₁₈ alkyl chains.

In a particular embodiment, Y⁻ is chosen from HSO₄⁻ or an entity comprising at least one halogen atom. Preferably, Y⁻ is not PF₆⁻.

In a preferred embodiment, Y⁻ is chosen from F⁻, Cl⁻, Br⁻, I⁻ and BF₄⁻.

In a particular embodiment, R⁶ are identical or different and selected from a hydrogen atom or branched or linear hydrocarbon chains, optionally comprising heteroatoms, notably devoid of oxygen, in particular R⁶ are aliphatic chains devoid of heteroatoms and comprising at least 3 carbon atoms, preferably R⁶ are identical C₃-C₁₈ alkyl chains; and

Y⁻ is chosen from an entity comprising at least one halogen atom, HSO₄⁻, H₂PO₄⁻, NO₃⁻, NO₂⁻, HCO₃⁻, in particular Y⁻ is chosen from HSO₄⁻ or an entity comprising at least one halogen atom, excluding PF₆⁻, preferably Y⁻ is chosen from F⁻, Cl⁻, Br⁻, I⁻ and BF₄⁻.

In a particular embodiment, ions of formula (III) are such that A is S (i.e. sulfonium salt), R⁶ is as defined herein, and Y⁻ is as defined herein, preferably a halide.

Examples of sulfonium salts suitable for the present invention, are in particular tributylsulfonium salts, dimethyl(octyl)sulfonium salts, (ethoxycarbonylmethyl)dimethyl sulfonium salts, dimethyl(2-phenylethyl)sulfonium salts, benzyl(diethyl)sulfonium salt, dimethyl[1-(4-methylphenyl)ethyl]sulfonium salts, [1-(dimethylamino)-4-pentenylidene]-2-propenylsulfonium salts, [1-(dimethylamino)-3-methyl-4-pentenylidene]-2-propenylsulfonium salt, or a combination thereof. Preferably, sulfonium salts are tributylsulfonium salts.

Such sulfonium salts may in particular be sulfonium halide salts (i.e. Y⁻ in formula (III) being a halide), or sulfonium hydrogen sulfate salts (i.e. Y⁻ in formula (III) being HSO₄⁻).

In a particular embodiment, ions of formula (III) are such that A is P (i.e. phosphonium salt), R⁶ is as defined herein, and Y⁻ is as defined herein, preferably a halide.

Examples of phosphonium salts suitable for the present invention, are in particular tetrabutylphosphonium salts, tetraoctylphosphonium salts, tetraphenylphosphonium salts, tributylmethylphosphonium salts, methyltriphenylphosphonium salts, isopropyltriphenylphosphonium salts, tributyl(tetradecyl)phosphonium salts, tributyl(hexadecyl)phosphonium salts, trihexyltetradecylphosphonium salts, dodecyltriphenylphosphonium salts, bis(triphenylphosphoniomethyl)benzene salts, benzyltriphenylphosphonium salts, tetraphenylphosphonium salts, or a combination thereof. Preferably, phosphonium salts suitable for the invention are tetrabutylphosphonium salts, tetraoctylphosphonium salts, tributyl(tetradecyl)phosphonium salts, tributyl(hexadecyl)phosphonium salts, trihexyltetradecylphosphonium salts or a combination thereof, and even more preferably, phosphonium salts suitable for the invention are tetrabutylphosphonium salts, tetraoctylphosphonium salts or a combination thereof.

Such phosphonium salts may in particular be phosphonium halide salts (i.e. Y⁻ in formula (III) being a halide), or phosphonium hydrogen sulfate salts (i.e. Y⁻ in formula (III) being HSO₄⁻).

In a particular embodiment, ions of formula (III) are such that A is N (i.e. ammonium salt), R⁶ is as defined herein, and Y⁻ is as defined herein, preferably a halide.

Examples of ammonium salts suitable for the present invention, are in particular tetrapropylammonium salts, tetrabutylammonium salts, tetrapentylammonium salts, tetrahexylammonium salts, tetraheptylammonium salts, tetraoctylammonium salts, didodecyldimethylammonium salts, hexadecyltrimethylammonium salts, trimethyloctadecylammonium salts, cetyltrimethylammonium salts, tributylmethylammonium salts, tributyl(hexadecyl)ammonium salts, tributyl(tetradecyl)ammonium salts, trihexyltetradecylammonium salts and myristyltrimethylammonium salts. Preferably, the ammonium salt is a tetrabutylammonium salt.

Such ammonium salts may in particular be ammonium halide salts (i.e. Y⁻ in formula (III) being a halide), or ammonium hydrogen sulfate salts (i.e. Y⁻ in formula (III) being HSO₄⁻).

Preferred tetrabutylammonium salts are tetrabutylammonium tetrafluoroborate (TBATFB), tetrabutylammonium chloride (TBACL), tetrabutylammonium bromide (TBAB), tetrabutylammonium Iodine (TBAI) and tetrabutylammonium hexafluorophosphate (TBAHFP). More preferably, the tetrabutylammonium salts are chosen from TBATFB, TBACL, TBAB and TBAI. Even more preferably, the tetrabutylammonium salt is TBATFB.

Another preferred tetrabutylammonium salt is tetrabutylammonium hydrogensulfate (TBASO).

The concentration of ions in the electroactive material is advantageously higher than 0.01% in weight of the electroactive material, preferably higher than 0.02%. For instance, such concentration may be from 0.05% to 0.5%, or from 0.1% to 0.3%, or from 0.15% to 0.2%, or from 0.05% to 0.2%, or from 0.1% to 0.2, or from 0.15% to 0.2%, in weight of the electroactive material.

Advantageously, the electroactive material further comprises dyes. Such dyes may be any suitable dyes, being compatible with liquid crystals. For instance, such dyes may be dichroic dyes.

In a particular embodiment, the electroactive layer is a DSM (dynamic scattering mode) electroactive layer, in particular an electroactive layer comprising nematic liquid crystals with ions using dynamic scattering mode (DSM).

Advantageously, the electroactive layer further comprises spacer particles. In such embodiment, the electroactive layer can be defined as a matrix, wherein spacer particles are included. Spacer particles may have any suitable shape, preferably a spherical shape. The spacer particles are advantageously transparent. The spacer particles may have a thickness greater than or equal to 1 µm and less than or equal to 100 µm, for example greater than or equal to 3 µm and less than or equal to 30 µm, and more particularly greater than or equal to 6 µm and less than or equal to 13 µm. The thickness of the spacer particles being measured along the direction separating the first and second stacks. The spacer particle is typically made in silicon dioxide (i.e. SiO₂). According to a variant, the spacer particles are photo spacer particles.

Spacer particles typically extends in the intermediate space between the alignment layers of the first and second stacks. More particularly, spacer particles are typically arranged in contact with the alignment layers of the first and second stacks. The spacer particles advantageously enable to separate the first and second stacks from each other. Preferably, the spacer particles are uniformly arranged inside the electroactive layer. The spacer particles may for instance be glued to either or both of the alignment layer of the first and second stacks. For example, a layer of glue may extend on the surface of each spacer particles.

The thickness of the electroactive layer typically corresponds to the thickness of the spacer particles. The thickness of the electroactive layer may in particular be greater than or equal to 1 µm and less than or equal to 100 µm, for example greater than or equal to 3 µm and less than or equal to 30 µm, and more particularly greater than or equal to 6 µm and less than or equal to 13 µm.

A length of the electroactive layer forming an electroactive area can be superior of equal to 1 cm, preferably superior or equal to 5 cm and advantageously superior or equal to 10 cm.

A width of the electroactive layer forming an electroactive area can have a length superior of equal to 1 cm, preferably superior or equal to 5 cm and advantageously superior or equal to 10 cm.

In a particular embodiment, the device further comprises a sealing layer. In such embodiment:
- the sealing layer delimits, with the alignment layers of the first and second stacks, an intermediate space, more particularly a sealed intermediate space,
- the intermediate space defines an electroactive area, which is filled by the electroactive layer.

The sealing layer typically defines a closed contour extending in sandwich between a peripheral zone the first stack of layers and a peripheral zone of the second stack of layers.

In other words, the electroactive layer extends in sandwich between the alignment layers of the first and second stacks and is peripherally delimited by the sealing layer.

The sealing material may in particular be made in a UV curing hot melt adhesive.

The sealing layer is advantageously transparent. The sealing layer is advantageously flexible.

The device can be prepared by any suitable technique known to the skilled artisan, for instance a roll-to-roll process, or one-drop filling. In a particular embodiment, the device is prepared by a process comprising the following steps:
i) preparing a first stack and a second stack by a process as described below,
ii) depositing an electroactive layer on the alignment layer of the first stack, said electroactive layer comprising an electroactive material comprising liquid crystals, and optionally ions, dyes, or mixtures thereof, and
iii) depositing the second stack on the electroactive layer, such that the electroactive layer is located between (and in contact with) the alignment layer of the first stack and the alignment layer of the second stack,
iv) subjecting the assembly obtained in step iii) to a pressing (or equivalently "lamination"), for instance by rolling.

The device may in particular be prepared by a process similar to that described in patent application EP 23305011, the content of which is incorporated by reference.

Figure 2 is a schematic cross-sectional view of an embodiment of a device according to the invention, said device comprising two stacks as represented in figure 1. The device 20 comprises:
- a first stack 10 as defined herein, comprising a dielectric substrate 1, an electro-conductive layer 2, and an alignment layer 3, wherein the electro-conductive layer 2 comprises a continuous area of dimension greater than or equal to 1 cm², preferably greater than or equal to 25 cm² and more preferably greater than or equal to 100 cm², and wherein the alignment layer 3 comprises a group of formula (I) as defined herein covalently bound to the electro-conductive layer 2;
- a second stack 10' as defined herein, comprising a dielectric substrate 1', an electro-conductive layer 2', and an alignment layer 3', wherein the electro-conductive layer 2' comprises a continuous area of dimension greater than or equal to 1 cm², preferably greater than or equal to 25 cm² and more preferably greater than or equal to 100 cm², and wherein the alignment layer 3' comprises a group of formula (I) as defined herein covalently bound to the electro-conductive layer 2';
   where the two stacks 10 and 10' face each other, and
- an electroactive layer 4 located between the first and second alignment layers 3 and 3', and comprising an electroactive material 5 comprising liquid crystals 6 (as defined herein), and optionally ions 7 (as defined herein), dyes 7' (as defined herein) or mixtures thereof.

The electroactive layer 4 further comprises spacer particles 8 (as defined herein).

The alignment layer 3 coats a part of a surface of the electro-conductive layer 2, which coats all of a surface of the dielectric substrate 1. The electro-conductive layer 2 has at least a first portion 2₁ and a second portion 2₂, wherein:
- the first portion 2₁ coats the dielectric substrate 1 and is coated with the alignment layer 3; and
- the second portion 2₂ coats the dielectric substrate 1 but is not coated with the alignment layer 3. The length of the second portion 2₂ is lower than the length of the first portion 2₁.

The alignment layer 3' coats a part of a surface the electro-conductive layer 2', which coats all of a surface of the dielectric substrate 1'. The electro-conductive layer 2' has at least a first portion 2₁' and a second portion 2₂', wherein:
- the first portion 2₁' coats the dielectric substrate 1' and is coated with the alignment layer 3'; and
- the second portion 2₂' coats the dielectric substrate 1' but is not coated with the alignment layer 3'. The length of the second portion 2₂' is lower than the length of the first portion 2₁'.

The device 20 also comprises a sealing layer 9. This sealing layer 9 delimits, with the alignment layers 3 and 3', an intermediate space, more particularly a sealed intermediate space, which is filled by the electroactive layer 4. The sealing layer 9 defines a closed contour extending in sandwich between a peripheral zone the first stack of layers 10 and a peripheral zone of the second stack of layers 10'. The electroactive layer 4 extends in sandwich between the alignment layers 3 and 3' and is peripherally delimited by the sealing layer 9.

Another object of the present invention is a glazing unit comprising a glazing (or equivalently "glazing substrate") and a device according to the invention attached to said glazing.

The glazing unit may in particular be used in the building industry, for instance as monolithic glazing or laminated glazing (e.g. plane or curved), double or triple glazing. Said glazing unit can be glazing for exterior walls, windows, door, interior partitions (including in humidity area such as, shower partition, etc.) or furniture, or other (interior) glazed surfaces. More particularly, the glazing unit may be:
- an architectural glazing, i.e. glazing in buildings and on the envelope of buildings,
- an interior glazing such as a room interior glazing, partition glazing, interior windows and doors for offices, hotel rooms, shops, restaurants, homes, private rooms, medical spaces, bathrooms, for example shower compartment glazing,
- equipment manufacturing (e.g. glazing for refrigerators, microwaves, furniture, lighting,...).

The glazing unit may in particular be used in vehicles such as motor vehicles, buses, railway vehicles or aircraft, to any part of glazing notably curved glazing, laminated or not, such as roof, windshield, lateral glazing, sidelites, etc.

The glazing unit may in particular be used in a projecting screen.

In a particular embodiment, the glazing unit comprises a glazing, a device according to the invention attached to a face of the glazing and an intermediate layer (i.e. adhesive layer). The device according to the invention can cover a part or all of the glazing, for instance it may form a band. The glazing unit is able to present a variable optical property, for example transmission haze, transmittance or reflectance.

The glazing is advantageously transparent. In some embodiments, the glazing is planar. In some embodiments, the glazing is convex. The glazing may in particular be a monolithic glazing comprising a single transparent pane.

The pane(s) of the glazing is(are) preferably (each independently) made of glass, particularly preferably soda-lime glass, as is customary for window. However, the pane(s) may also be made of other types of glass, for example quartz glass, borosilicate glass or alumino-silicate glass, or of plastics, for example polycarbonate, polyethylene terephthalate (PET) or polymethyl methacrylate. The pane can be made of non-tempered, partially-tempered or tempered glass. The thickness of the pane can vary widely and be adapted to the requirements in individual cases.

Preferably, for vehicle applications, the thickness of the pane is from 0.1 mm to 10 mm and, in the case of glass, preferably from 1 mm to 5 mm, most preferably from 1.4 mm to 3 mm.

For building applications, the thickness of the pane is from 1 mm to 12 mm, for example from 2 mm to 8 mm and for example from 3 mm to 6 mm.

The transparent pane may be clear, extra clear or tinted.

The intermediate layer is an adhesive layer. For example, the intermediate layer is an Optical Clear Adhesive (OCA) sheet. The intermediate layer is for example made of Polyvinyl butyral (also known under the acronym "PVB"), polyurethane ("PU") or ethylene-vinyl acetate ("EVA"). The intermediate layer typically extends in sandwich between the glazing and the device of the invention.

The glazing unit may have a length of greater than or equal to 1 cm, advantageously greater than or equal to 5 cm and preferably greater than or equal to 10 cm.

The glazing unit may have a width of greater than or equal to 1 cm, advantageously greater than or equal to 5 cm and preferably greater than or equal to 10 cm.

The device of the invention is usually attached to the glazing through one of the dielectric substrates. In a particular embodiment, the device of the invention is attached to the glazing through a residual alignment layer, which coats, partially or totally, one of the dielectric substrates.

In a particular embodiment, the glazing unit comprises a device according to the invention attached to a face of a first glazing with a first intermediate layer and is further attached to a face of a second glazing with a second intermediate layer. The device of the invention is usually attached to the first glazing through a first dielectric substrate and usually attached to the second glazing through a second dielectric substrate.

Figure 3 represents a schematic cross-sectional view of an embodiment of a glazing unit according to the invention, said glazing unit comprising the device of figure 2. The glazing unit 30 comprises a device 20 as defined herein and a glazing 12, said device 20 being attached to a face of the glazing 12 with an adhesive layer 14.

The present invention also relates to a process for preparing a stack as defined herein. This process is advantageously carried out under conditions that can be endured by flexible substrates.

Step a) of the process according to the invention comprises providing a dielectric substrate coated with an electro-conductive layer. The dielectric substrate and the electro-conductive layer are as defined above for the stack of the invention. In particular, the electro-conductive coats all or part (preferably, all) of a surface of the dielectric substrate. The dielectric substrate coated with an electro-conductive layer may be prepared by any suitable technique known to the skilled artisan. For instance, the electro-conductive layer may be deposited onto the dielectric substrate by physical vapor deposition (PVD), such as magnetron, by wet coating deposition, or by sputtering.

Step b) of the process according to the invention comprises applying an alignment solution layer on the surface of the electro-conductive layer, wherein the alignment solution comprises a compound of formula (II):

(R¹O)₃Si-R²-Z(R³)ₙ(R⁴)(R⁵)⁺ , X⁻ (II),

in which:
each R¹ is independently a C1-C22 alkyl, C2-C22 alkenyl, or C6-C12 aryl,
R² is a C1-C12 alkylene,
R³ and R⁴ are each independently selected from C1-C12 alkyl, C2-C12 alkenyl, and C6-C12 aryl,
R⁵ is an alkyl, alkenyl, aryl or any combination thereof, and has 8 to 26 carbon atoms,
Z is N, S, or P,
n is 0 when Z is S, and n is 1 when Z is N or P, and
X⁻ is an anion.

R^{1'}s are identical to or different from each other, preferably identical. In some embodiments, each R¹ is independently chosen from C1-C6 alkyl, C2-C6 alkenyl, and phenyl. Preferably, each R¹ is independently chosen from C1-C6 alkyl. More preferably, each R1 is a methyl.

The embodiments described above for Z, R², R³, R⁴, R⁵, n, and X⁻ in formula (I) also apply respectively to Z, R², R³, R⁴, R⁵, n, and X⁻ in formula (II).

In particular, a compound of formula (II) may be such that:
R² is a C1-C12 alkylene, R³ and R⁴ are each independently selected from C1-C12 alkyl, R⁵ is a C8-C22 alkyl, Z is N, and n is 1.

Preferably, the compound of formula (II) is dimethyloctadecyl[3-(trimethoxysilyl)propyl]ammonium chloride (DMOAP).

The alignment solution refers to a solution comprising a compound of formula (II) as defined herein in a solvent. The solvent may be any suitable solvent compatible with the conditions of process of the invention. The solvent may for instance, be water (i.e. aqueous solution), alcohol such as methanol, ethanol, propanol, or isopropanol, acetone, acetonitrile, ethyl acetate, ethers such as diethylether or tetrahydrofuran, or a mixture thereof.

Preferably, the alignment solution is an aqueous solution.

The concentration of the compound of formula (II) in the solution is not particularly limited. In particular, such concentration may be from 0.01% to 20 % w/v, for instance from 0.5% to 10% w/v, preferably from 1% to 5% w/v, more preferably from 1.5% to 2.5%.

Applying the alignment solution on a surface of the electro-conductive layer may be carried out by any suitable technique known to skilled artisan, for instance by soaking, bar coating, dip coating, spin-coating, slit-coating, curtaining, ink-jet printing, slot-die deposition, layer-by-layer deposition, or printing. Preferably, applying the alignment solution on a surface of the electro-conductive layer is carried out by soaking.

The applying step may be carried out by several successive passes, so that a sufficient amount of compound of formula (II) is deposited on said surface. In particular, the number of passes depends in particular on the concentration of the compound of formula (II) in the solution.

The duration of the applying (e.g. the soaking) may be suitably adjusted by the skilled artisan, in particular depending on the applying technique, the concentration of the compound of formula (II) in the solution, and the number of successive passes. For instance, such duration may be from 1 minute to 6 hours, more particularly from 10 minutes to 1 hour. The applying is preferably carried out at room temperature. "Room temperature" refers to a temperature from 10°C to 35°C, preferably from 18 °C to 30 °C.

An alignment solution layer coated on the electro-conductive layer is thereby obtained in step b). The alignment solution layer may coat all or part (preferably, part) of a surface the electro-conductive layer.

Depending on the conditions of the applying step b), an additional (or "residual") alignment layer may also be coated on all or part of a second surface of the dielectric substrate (a first surface of the substrate being totally or partially coated with the electro-conductive layer).

After applying the solution in step b) and before step c), the alignment layer coating the electro-conductive layer (and optionally the residual alignment layer) may be rinsed with a solvent (which is typically the same as the solvent of the alignment solution), and optionally, partially dried with an air or inert gas (e.g. nitrogen or argon) flow.

Step c) of the process according to the invention comprises drying the alignment solution layer (and optionally the residual alignment layer). The drying step is carried out at a temperature sufficiently high to enable the evaporation of the solvent of the alignment layer solution (called "drying temperature"). Advantageously, the drying temperature is comprised between 80°C and 150°C, for instance between 90°C and 120°C, or between 95°C and 110°C. The drying temperature is particularly low compared to usual temperatures applied for preparing alignment layers, and thus be endured by flexible substrates.

The duration of the drying step can be suitably adjusted by the skilled artisan. For instance, such duration may be from 1 minute to 6 hours, more particularly from 30 minutes to 2 hours.

Step c) allows to obtain a stack according to the invention.

The invention will also be described in further detail in the following examples, which are not intended to limit the scope of this invention, as defined by the attached claims.

### EXAMPLES

The following process was carried out:
An alignment solution of dimethyloctadecyl[3-(trimethoxysilyl)propyl]ammonium chloride (DMOAP) in deionized (DI) water (concentration: 2%). Then, a polyethylene terephthalate (PET) substrate coated with a transparent ITO conductive layer was soaked in the alignment solution for 20 minutes. The resulting soaked substrate was cleaned with DI water and dried with nitrogen air (clean air). Then, the resulting dried material was put in the oven at about 100°C for 1 hour.

A Nematic Liquid Crystal (with negative dielectric anisotropy) sample was then deposited on the alignment layer with an injection nozzle. A roller laminator was applied so that the liquid crystal evenly filled the area delimited by the sealing.

Test parameters: Cell gap: 12 µm.

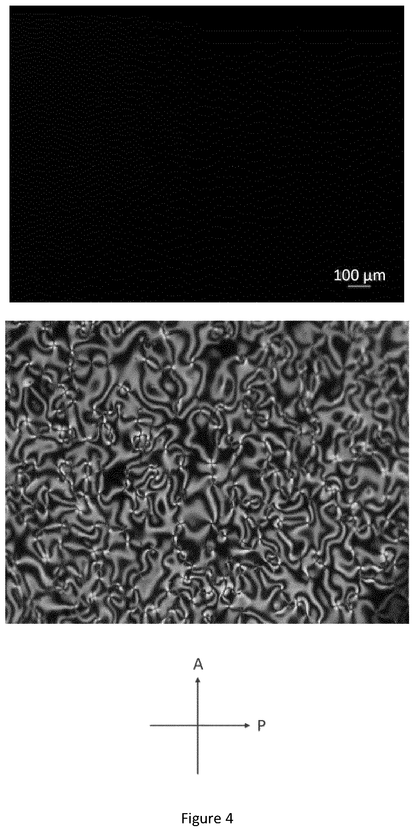

The polarized optical microscopy (POM) image under cross polarizers showing homeotropic alignment induced by the alignment layer was demonstrated in Figure 4. Figure 4 shows the LC sample without the applied voltage (top) and with the applied voltage (bottom). Voltage: 10 V; Frequency: 1 kHz.

The absence of observable light leakage under cross polarizers without voltage revealed that the optical axis of the LC is perpendicular to the substrates. The alignment of the LC sample is thus a homeotropic alignment. After applying the voltage on the LC sample, the LC rotated parallel to the substrates. Therefore, the phase difference occurred, and the light was transmitted.

## Claims

1. A stack (10, 10') comprising a dielectric substrate (1, 1'), an electro-conductive layer (2, 2'), and an alignment layer (3, 3'), wherein the electro-conductive layer (2, 2') comprises a continuous area of dimension greater than or equal to 1 cm², preferably greater than or equal to 25 cm² and more preferably greater than or equal to 100 cm², and
wherein the alignment layer (3, 3') comprises a group of formula (I) covalently bound to the electro-conductive layer (2, 2'):
-(O)₃Si-R²-Z(R³)ₙ(R⁴)(R⁵)⁺ , X⁻ (I),
in which:
R² is a C1-C12 alkylene,
R³ and R⁴ are each independently selected from C1-C12 alkyl, C2-C12 alkenyl, and C6-C12 aryl,
R⁵ is an alkyl, alkenyl, aryl or any combination thereof, and has 8 to 26 carbon atoms,
Z is N, S, or P,
n is 0 when Z is S, and n is 1 when Z is N or P, and
X⁻ is an anion.

2. The stack according to claim 1, wherein the dielectric substrate (1, 1') is made of an organic polymer, preferably chosen from polyethylene, polypropylene, polyvinyl chloride, polyesters such as polyethylene terephthalate or polyethylene naphthalate, polycarbonate, polyurethane, polyacrylates such as polybutylacrylate or polymethyl methacrylate, polyamide, polyimide, and a fluoropolymer such as ethylene tetrafluoroethylene, polyvinylidene fluoride, polychlorotrifluoroethylene, ethylene chlorotrifluoroethylene, or fluorinated ethylene-propylene copolymers, or the dielectric substrate (1, 1') is a glassy substrate, such as an ultrathin glass sheet, preferably a substrate made of polyethylene terephthalate.

3. The stack according to claim 1 or 2, wherein the electro-conductive layer (2, 2') comprises a transparent conductive layer, preferably a transparent conductive oxide (TCO) layer, such as an Indium-Tin Oxide (ITO) or Fluorine-doped Tin Oxide (FTO) layer, a poly(3,4-ethylenedioxythiophene): poly(styrenesulfonate) salt layer or a silver nano-wire.

4. The stack according to any one of claims 1 to 3, wherein in formula (I):
R² is a C1-C12 alkylene,
R³ and R⁴ are each independently selected from C1-C12 alkyl,
R⁵ is a C8-C22 alkyl,
Z is N, and
n is 1.

5. The stack according to any one of claims 1 to 4, wherein in formula (I):
R² is a C1-C6 alkylene,
R³ and R⁴ are each independently a C1-C6 alkyl,
R⁵ is a C14-C22 alkyl,
Z is N,
n is 1, and
X⁻ is a halide.

6. The stack according to any one of claims 1 to 5, wherein the dielectric substrate (1, 1'), the electro-conductive layer (2, 2'), and the alignment layer (3, 3') are transparent and flexible.

7. A device (20) comprising:
- a first stack (10) as defined in any one of claims 1 to 6;
- a second stack (10') as defined in any one of claims 1 to 6;
the two stacks (10, 10') facing each other,
- an electroactive layer (4) located between the first and second alignment layers (3, 3'), and comprising an electroactive material (5) comprising liquid crystals (6), and optionally ions (7), dyes (7') or mixtures thereof.

8. The device according to claim 7, wherein the liquid crystals (6) are cholesteric liquid crystals, nematic liquid crystals, smectic liquid crystals, polymer network liquid crystals, polymer stabilized cholesteric crystals or polymer dispersed liquid crystals, preferably cholesteric or nematic liquid crystals.

9. The device according to claim 7 or 8, wherein the electroactive material (5) does not comprise polymer at all or comprises a rate of polymer lower than 15 % in weight.

10. The device according to any one of claims 7 to 9, wherein the ions (7), when present, are chosen from zwitterion, halides ions, sulfate ions, and metal ions, preferably from ions of formula (III):
[A(R⁶)ₘ]⁺ Y⁻ (III),
in which:
A is chosen from N, P and S, preferably A is N;
when A is S, m is 3; when A is N or P, m is 4,
R⁶ are identical or different and selected from a hydrogen atom or a branched or linear hydrocarbon chain, optionally comprising heteroatoms;
Y⁻ is chosen from an entity comprising at least one halogen, HSO₄⁻, H₂PO₄⁻, NO₃⁻, NO₂, and HCO₃⁻.

11. A glazing unit (30), in particular a monolithic glazing, a laminated glazing, a double glazing or triple glazing, comprising a glazing (12) and a device (20) as defined in any of claims 7 to 10 attached to said glazing.

12. A process for preparing a stack as defined in any one of claims 1 to 6, comprising:
a) providing a dielectric substrate coated with an electro-conductive layer, wherein the electro-conductive layer comprises a continuous area of dimension greater than or equal to 1 cm², preferably greater than or equal to 25 cm² and more preferably greater than or equal to 100 cm²,
b) applying an alignment solution layer on the surface of the electro-conductive layer, preferably by soaking, and
c) drying the alignment solution layer, preferably at a temperature comprised between 80°C and 150°C, so as to obtain a stack comprising an alignment layer,
wherein the alignment solution comprises a compound of formula (II):
(R¹O)₃Si-R²-Z(R³)ₙ(R⁴)(R⁵)⁺ , X⁻ (II),
in which:
each R¹ is independently a C1-C22 alkyl, C2-C22 alkenyl, or C6-C12 aryl,
R² is a C1-C12 alkylene,
R³ and R⁴ are each independently selected from C1-C12 alkyl, C2-C12 alkenyl, and C6-C12 aryl,
R⁵ is an alkyl, alkenyl, aryl or any combination thereof, and has 8 to 26 carbon atoms,
Z is N, S, or P,
n is 0 when Z is S, and n is 1 when Z is N or P, and
X⁻ is an anion.

13. The process according to claim 12, wherein the alignment solution is an aqueous solution, and preferably the concentration of the compound of formula (II) in the solution is from 0.01 to 20 % w/v, preferably from 1% to 5% w/v.

14. The process according to claim 12 or 13, wherein in formula (II):
R² is a C1-C12 alkylene,
R³ and R⁴ are each independently selected from C1-C12 alkyl,
R⁵ is a C8-C22 alkyl,
Z is N, and
n is 1.

15. The process according to any one of claims 12 to 14, wherein the compound of formula (II) is dimethyloctadecyl[3-(trimethoxysilyl)propyl]ammonium chloride.
